## (19) Europäisches Patentamt
European Patent Office
Office européen des brevets

(11) **EP 1 248 900 B1**

(12) **EUROPÄISCHE PATENTSCHRIFT**

(45) Veröffentlichungstag und Bekanntmachung des Hinweises auf die Patenterteilung:
**07.12.2005   Patentblatt 2005/49**

(51) Int Cl.⁷: **F01N 11/00**

(21) Anmeldenummer: 01901173.3

(22) Anmeldetag: **18.01.2001**

(86) Internationale Anmeldenummer:
**PCT/EP2001/000575**

(87) Internationale Veröffentlichungsnummer:
**WO 2001/053672 (26.07.2001 Gazette 2001/30)**

(54) **VERFAHREN UND VORRICHTUNG ZUR DIAGNOSE EINES NOx-SPEICHERKATALYSATORS**

METHOD AND DEVICE FOR DIAGNOSIS OF AN NOx STORAGE CATALYST

PROCEDE ET DISPOSITIF POUR EFFECTUER UN DIAGNOSTIC SUR UN CATALYSEUR ACCUMULATEUR DE NOx

(84) Benannte Vertragsstaaten:
**DE FR GB IT**

(30) Priorität: **19.01.2000  DE 10001994**
**24.02.2000  DE 10008563**

(43) Veröffentlichungstag der Anmeldung:
**16.10.2002   Patentblatt 2002/42**

(73) Patentinhaber: **Volkswagen Aktiengesellschaft**
**38436 Wolfsburg (DE)**

(72) Erfinder:
 • **DRÜCKHAMMER, Jens**
 **38108 Braunschweig (DE)**

 • **SCHULZE, Frank**
 **38533 Vordorf (DE)**
 • **LANG, Axel**
 **38304 Wolfenbüttel (DE)**

(74) Vertreter: **Pohlmann, Bernd Michael**
**Patentanwalt**
**Günthersburgallee 40**
**60316 Frankfurt am Main (DE)**

(56) Entgegenhaltungen:
**EP-A- 0 690 213      EP-A- 0 814 248**
**EP-A- 0 936 349      EP-A- 0 969 194**
**EP-A- 1 053 777**

**Beschreibung**

Die Erfindung betrifft ein Verfahren und eine Vorrichtung zur Diagnose eines $NO_X$-Speicherkatalysators mit den im Oberbegriff der Ansprüche 1 bzw. 14 genannten Merkmalen.

Für die Entwicklung leistungsfähiger und zugleich umweltfreundlicher Verbrennungsmotoren für Kraftfahrzeuge ist die Optimierung des Luft/Kraftstoffgemischs von zentraler Bedeutung. Mit dem bisher üblichen 3-Wege-Katalysator allein lässt sich dieses Problem jedoch nicht lösen, da dieser nur wenn Luft und Kraftstoff im genau definiertem stöchiometrischen Verhältnis dem Motor zugeführt werden, die beim Betrieb des Motors entstehenden Abgase zu unschädlichen Gaskomponenten reduzieren kann. Die stöchometrische Betriebsart mit einem sog. Lambdawert = 1 des Luftkraftstoffgemischs ist jedoch nicht die verbrauchsgünstigste. Ein wesentlich geringerer Kraftstoffverbrauch kann bei etwa zweifachem Luftüberschuss im Luft/Kraftstoffgemisch, d.h. bei einem Lambdawert > 2 erreicht werden. Da die herkömmlichen Katalysatoren bei Luftüberschuss die entstehenden Stickoxide ($NO_X$) nicht mehr reduzieren können, ist diese Betriebsart ohne weitere Maßnahmen unter dem Gesichtspunkt der Umweltbelastung nicht zu vertreten.

Eine bevorzugte Lösung dieses Problems ohne Zudosierung eines Reduktionsmittels ist der Einsatz von $NO_X$-Speicherkatalysatoren in der Abgasanlage. Ein $NO_X$-Speicherkatalysator kann Stickoxide unter bestimmten Randbedingungen bei einem Lambdawert > 1 für einen begrenzten Zeitraum absorptiv speichern und zu einem späteren Zeitpunkt bei einem Lambdawert < 1 oder = 1 wieder ausspeichern und zu unschädlichen Gasen reduzieren. Üblicherweise werden $NO_X$-Speicherkatalysatoren in einem Speicherzyklus betrieben, der zumindest einen üblicherweise langsamen Absorptionsmodus und einem schnelleren Regenerationsmodus umfasst.

$NO_X$-Speicherkatalysatoren finden vorwiegend Anwendung bei Magermotoren. Bei dieser Motorenart wird der sog. Magerbetrieb mit einem Lambdawert > 1 des Luft/Kraftstoffgemischs im Vergleich zu einem stöchiometrischen oder einem sog. fetten Betrieb mit einem Lambdawert <1 bevorzugt. Eine besondere Form des Magermotors stellen Schichtladungsmotoren dar. Im Schichtladebetrieb eines Schichtladungsmotors wird dem Motor ein mageres Luft/Kraftstoffgemsich zugeführt und im Brennraum in der Nähe der Zündkerze ein zündfähiges fettes Luft/Kraftstoffgemisch bereitgestellt, während im übrigen Teil des Brennraums ein mageres Gemisch vorhanden ist. Mit der Zündkerze wird zunächst das fette Luft/Kraftstoffgemisch und mit diesem dann das magere gezündet. Während des Schichtladebetriebs wird der $NO_X$-Speicherkatalysator im Absorptionsmodus betrieben. Im Homogenbetrieb des Motors wird dagegen ein stöchiometrisches oder fettes Luft/Kraftstoffgemisch zugeführt und der $NO_X$-Speicherkatalysator im Regenernationsmodus betrieben.

Gesetzliche Vorschriften in einer zunehmenden Anzahl von Industrieländern sehen vor, dass Fehler an abgasbeeinflussenden Bauteilen eines Kraftfahrzeugs die dazu führen könnten, dass Schadstoffemessionsgrenzwerte nicht eingehalten werden, im Rahmen einer On-Board-Diagnose während des Fahrbetriebs erkannt und angezeigt werden müssen. Zu den angesprochenen abgasbeeinflussenden Bauteilen zählt auch der $NO_X$-Speicherkatalysator. Funktion und Wirkungsgrad eines $NO_X$-Speicherkatalysators hängen von einer Vielzahl von Einflussfaktoren ab und können insbesondere reversiblen und irreversiblen Schädigungen unterliegen. Reversible Schädigungen können beispielsweise durch eine Verschwefelung des Katalysators entstehen und insbesondere zu einer Reduzierung der $NO_X$-Speicherfähigkeit führen. Thermische Schädigungen, wie Sinterung einer Katalysatorkomponente, Entmischung von Katalysator- und Speicherkomponente oder eine zunehmend inhomogene, oberflächennahe $NO_X$-Beladung stellen dagegen irreversible Schädigungen des $NO_X$-Speicherkatalysators dar. Thermische Schädigungen führen in der Regel neben einer Reduzierung der $NO_X$-Speicherfähigkeit auch zu einer reduzierten Sauerstoffspeicherfähigkeit des Katalysators. Neben betriebsbedingten Schädigungen können auch herstellungsbedingte Streuungen in den Eigenschaften Wirkungsgrad und Funktion der Katalysatoren beinflussen.

Aus der EP 0936349A2 ist bereits ein System zur Diagnose der Schädigung eines $NO_X$-Katalysators bekannt, der an einen Verbrennungsmotor angeschlossen ist und bei dem die Signale einer hinter dem Katalysator angeordneten $NO_X$-empflindlichen Sonde zur Beurteilung des Schädigungsgrades ausgewertet werden. Die EP 0936349A2 offenbart in diesem Zusammenhang eine Verminderung der $NO_X$-Konzentration nach dem Umschalten auf ein fettes Luft/Kraftstoffgemisch. Die $NO_X$-Konzentration erreicht nach einer gewissen Zeit ein Minimum um anschließend wieder auf höhere Werte anzusteigen und schließlich wieder einen Wert zu erreichen, wie er vor dem Umschalten auf Sauerstoffmangel bestanden hat. Der Zustand des $NO_X$-Speicherkatalysators beziehungsweise seine Schädigung wird bei dem bekannten System aus der Veränderungsrate der $NO_X$-Konzentration nach Erreichen des Minimums ermittelt. Hierfür müssen Werte der $NO_X$-Konzentration innerhalb eines relativ großen Zeitintervalls nach Umschalten auf Sauerstoffmangel herangezogen werden, was zu einer entsprechend langen Diagnosedauer führt. Ein weiterer Nachteil besteht darin, dass die Rate der Veränderung der $NO_X$-Konzentration in dem verwendeten Zeitintervall empfindlich von den Betriebsparametern des Motors und der Abgasanlage abhängig ist und daher aufwendige Korrekturmaßnahmen erfordert.

In der EP 1 053 777 ist Verfahren zur Kontrolle der katalytischen Aktivität eines NOx - Speicherkatalysators beschrieben, wonach die NOx - Konzentration stromab eines des Katalysators während der Regenerationsphase ermittelt und als Maß für die katalytische Aktivität des Katalysators herangezogen wird.

Die Aufgabe der Erfindung besteht in der Angabe eines Verfahrens und einer Vorrichtung zur Diagnose eines NOX-Speicherkatalysators, die im wesentlichen auf der Auswertung von Werten der NOX-Konzentration innerhalb eines relativ kurzen Zeitintervalls basiert und eine relativ schnelle und unaufwendige Diagnose ermöglicht.

Diese Aufgabe wird jeweils mit den Merkmalen der unabhängigen Ansprüche gelöst.

Die Erfindung geht von der Erkenntnis aus, dass bei einem Übergang des NOX-Speicherkatalysators von einem Adsorptionsmodus zu einem Regenerationsmodus innerhalb eines kurzen Zeitintervalls nur ein Teil des ausgespeicherten NOX katalytisch umgesetzt wird . Der nicht umgesetzte Teil des NOX führt zu einem kurzzeitigen Anstieg der NOX-Konzentration im Abgas, dem sog. NOX-Desorptionspeak. Charakteristische Eigenschaften dieses Peaks, wie beispielsweise zeitliche Dauer, Höhe oder dgl. stehen in Beziehung zur Funktion bzw. zu ggfs. vorhandenen Schädigungen des NOX-Katalysators. Erfindungsgemäß werden die NOX-Konzentration im Abgas stromabwärts des NOX-Speicherkatalysators gemessen, die Werte von charakteristischen Merkmalen eines NOX-Desorptionspeaks in der NOX-Konzentration ermittelt und mit vorgegebenen Prüfmustern verglichen und ein Vergleichsergebnis gebildet. Ein in Abhängigkeit von dem Vegleichsergebnis gebildetes Katalysator-Zustandssignal, insbesondere ein Fehlersignal wird gespeichert und/oder angezeigt. Da der NOx-Desorptionspeak innerhalb eines relativ kurzen Zeitintervalls, beispielsweise nach dem Übergang von einem mageren zu einem fetten oder stöchiometrischen Luft/Kraftstoffgemisch auftritt, ist eine relativ kurze Diagnosedauer erreichbar. Im günstigsten Fall reicht die Zeitdauer eines einzelnen $NO_X$-Desorptionspeaks für die erfindungsgemäße Diagnose aus. Die erfindungsgemäße Ermittlung von Werten charakteristischer Merkmale des $NO_X$-Desorptionspeaks erlaubt eine besonders einfache Auswertung des zeitlichen Verlaufs der $NO_X$-Konzentration in dem interessierenden Zeitintervall, so dass eine hinreichend genaue Diagnose mit einem geringen Erkennungsaufwand erreichbar ist. Da der $NO_X$-Desorptionspeak weitgehend unabhängig von der $NO_X$-Beladung des $NO_X$-Speicherkatalysators ist, ergibt sich als weiterer Vorteil eine nur geringe Empfindlichkeit der Diagnoseergebnisse von Variationen in der $NO_X$-Beladung des $NO_X$-Speicherkatalysators und damit den Betriebsparametern von Verbrennungsmotor und Abgasanlage.

Weitere Merkmale und Vorteile der vorliegenden Erfindung ergeben sich aus den abhängigen Ansprüchen sowie unabhängig von ihrer Zusammenfassung in den Ansprüchen aus der nachfolgenden Beschreibung bevorzugter erfindungsgemäßer Ausführungsbeispiele in Verbindung mit den zugehörigen Zeichnungen.

In den Zeichnungen zeigen in schematischer Darstellung:

Figur 1    einen Verbrennungsmotor mit einem $NO_X$-Speicherkatalysator;

Figur 2    ein Diagramm zeitlicher Verläufe verschiedener Signale bei einem Regeneriervorgang eines $NO_X$-Speicherkatalysators;

Figur 3    ein Ablaufdiagramm der Diagnose eines $NO_X$-Speicherkatalysators.

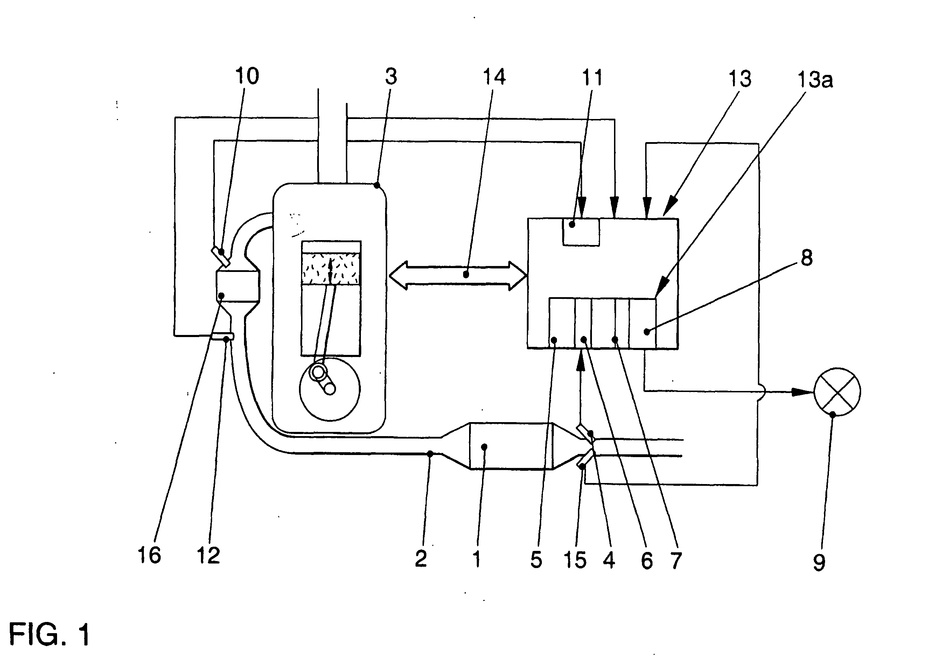

Figur 1 zeigt einen nur schematisch dargestellten mager betreibbaren Verbrennungsmotor 3 eines Kraftfahrzeugs, wie zum Beispiel einen Schichtladungsmotor mit einer nachgeschalteten Abgasanlage 2 sowie mit einer Motorsteuerung 13 und einer $NO_X$-Kontrolleinrichtung 13a für die On-Board-Diagnose eines $NO_X$-Speicherkatalysators 1 zur Speicherung und Umsetzung von Stickoxiden. Der $NO_X$-Speicherkatalysator 1 ist in einem Speicherzyklus mit einen Absorptions- und einen Regenerationsmodus betreibbar.

Der Abgasanlage 2 sind neben dem $NO_X$-Speicherkatalysator 1 ein Vorkatalysator 16, ein Temperatursensor 12 sowie Lambdasonden 10 und 15 zur Erfassung des Lambdawerts des Abgases im Bereich des Vorkatalysators 16 bzw. stromabwärts des $NO_X$-Speicherkatalysators 1 zugeordnet. Ein stromabwärts des $NO_X$-Speicherkatalysators 1 angeordneter an sich bekannter $NO_X$-Sensor 4 liefert ein selektiv die $NO_X$-Konzentration im Abgas repräsentierendes $NO_X$-Signal sowie ggf. ein entsprechendes Signal für die Sauerstoffkonzentration.

Das Motorsteuergerät 13 erfasst in bekannter Weise über den Temperatursensor 12 und weitere (nicht dargestellte) Sensoren Betriebsparameter des Verbrennungsmotors 3 wie Abgastemperatur, Last, Drehzahl, Rohemissionsverlauf oder dgl. und kann diese über (nicht dargestellte) Stellglieder, wie beispielsweise eine Drosselklappe in der Luftzuführung des Verbrennungsmotors 3 gegebenenfalls beeinflussen. Die Kommunikation zwischen dem Motorsteuergerät 13 und dem Verbrennungsmotor 3, bzw. den Stellgliedern erfolgt über ein Kabelsystem 14. Das Motorsteuergerät 13 umfaßt insbesondere eine Lambdaregelung 11, die mit der Lambdasonde 10 verbunden ist. Weiterhin beinhaltet das Motorsteuergerät 13 die $NO_X$-Kontrolleinrichtung 13a, der das Signal der $NO_X$-Sonde 4 zugeführt wird.

Die ggf. auch als separates Bauteil ausgeführte $NO_X$-Kontrolleinrichtung 13a weist Mittel 5 zum Ermitteln der Werte von charakteristischen Merkmalen eines $NO_X$-Desorptionspeaks, Mittel 6 zum Vergleich der ermittelten Werte mit vorgegebenen Prüfmustern und zur Bildung eines Vergleichsergebnis entsprechend der Abweichung zwischen den ermittelten Werten und den

Prüfmustern, sowie Auswertungsmittel 7 und Speichermittel 8 auf. Die $NO_X$-Kontrolleinrichtung 13a kann beispielsweise durch einen Mikrokontroller mit einer CPU, einem Programmspeicher, einem Datenspeicher und Eingabe- und Ausgabeschnittstellen realisiert sein. Ein Katalysator-Zustandssignal, insbesondere ein Fehlersignal wird, wie nachfolgend noch genauer beschrieben wird, von den Auswertungsmitteln 7 in Abhängigkeit von dem Vergleichsergebnis gebildet, welches von den Mitteln 6 geliefert wird. Zur Anzeige des Katalysator-Zustandssignals ist die $NO_X$-Kontrolleinrichtung 13a über eine (nicht dargestellte) Schnittstelle mit Anzeigemitteln 9, beispielsweise einer Leuchtanzeige verbunden. Die Prüfmuster, die beispielsweise in einem ROM abgelegten sein können, repräsentieren Soll-Werte der charakteristischen Merkmale des $NO_X$-Desorptionspeaks im Abgas stromabwärts des $NO_X$-Speicherkatalysators 1 bei einem Übergang vom Absorptions- zum Regenerationsmodus des $NO_X$-Speicherkatalysators 1, worauf nachfolgend noch genauer eingegangen wird.

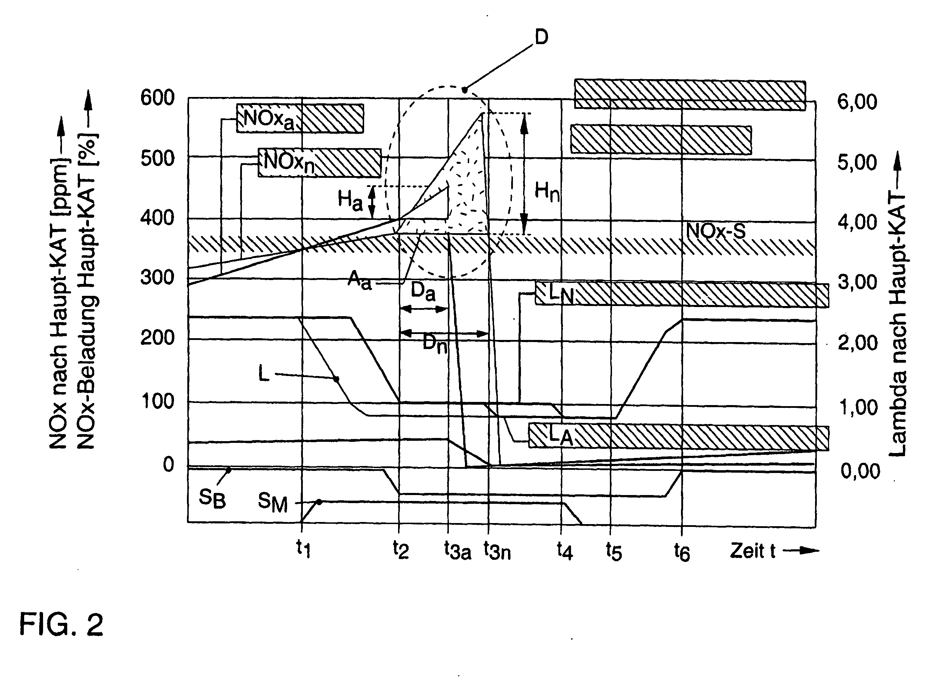

Figur 2 stellt zur Veranschaulichung des erfindungsgemäßen Verfahrens den prinzipiellen zeitlichen Verlauf von Signalen für den Regeneriervorgang eines $NO_X$-Speicherkatalysators 1 beim Übergang von Mager- auf Fettbetrieb bei einem Schichtladungsmotor dar. Bis zum Zeitpunkt $t_1$ befindet sich der $NO_X$-Speicherkatalysator 1 im Absorptionsmodus. Zu diesem Zeitpunkt wird vom Motorsteuergerät 13 erkannt, dass eine Regeneration des $NO_X$-Speicherkatalysators 1 erforderlich ist. Dies kann zum Beispiel geschehen, wenn das Motorsteuergerät 13 feststellt, dass die $NO_X$-Konzentration im Abgas einen Schwellwert $NO_X$-S erreicht hat, weil die $NO_X$-Beladungskapazität des $NO_X$-Speicherkatalysators 1 ausgeschöpft ist und damit kein oder nur eine geringe Menge an $NO_X$ weiter eingelagert werden kann. Zum Zeitpunkt $t_1$ erfolgt daher von der Motorsteuerung 13 die Anforderung einer $NO_X$-Reduktion und der Wert des Steuersignals $S_M$ wird auf 1 gesetzt. Der Lambdawert L des Luft/Kraftstoffgemischs wird dementsprechend von einem Wert >2 auf einen Wert von ca 0.9 abgesenkt, was einem Übergang von einem Sauerstoffüberschuss zu einem Sauerstoffmangel entspricht.

Der Verbrennungsmotor 3 wird beginnend mit dem Zeitpunkt $t_1$, da nunmehr ein fettes Luft/Kraftstoffgemisch zur Verfügung gestellt wird, von Schicht- auf Homogenbetrieb umgeschaltet. Das Steuersignal $S_B$ wird von 1 auf 0 gesetzt. Zu diesem Zeitpunkt beginnt der eigentliche Regenerationsmodus des $NO_X$-Speicherkatalysators 1. Unter diesen Bedingungen wird kurzzeitig zunächst nicht das gesamte $NO_X$ im Abgas an dem $NO_X$-Speichertcatalysator 1 katalytisch umgesetzt. Es kommt kurzzeitig zu einem Anstieg der $NO_X$-Konzentration über den Schwellwert $NO_X$-S hinaus, der als $NO_X$-Desorptionspeak im $NO_X$-Signal zu erkennen ist.

In Figur 2 ist im Bereich D für den zeitlichen Verlauf der $NO_X$-Signale $NO_{Xn}$ und $NO_{Xa}$ bei einem neuen bzw. einem gealterten $NO_X$-Speicherkatalysator 1 der jeweilige, in diesem Fall im Wesentlichen dreiecksförmige $NO_X$-Desorptionspeak dargestellt. Als charakteristische Merkmale der jeweiligen $NO_X$-Desorptionspeaks sind der Maximalwert $H_n$, die Fläche $A_n$ und die zeitliche Dauer $D_n$ für einen neuen, beziehungsweise $H_a$, $A_a$ und $D_a$ für einen gealterten $NO_X$-Speicherkatalysator in der Zeichnung eingetragen. Die Werte dieser Merkmale sind jeweils bezogen auf eine Referenz-$NO_X$-Konzentration. In dem Ausführungsbeispiel wird als Referenz-$NO_X$-Konzentration der Wert der gemessenen $NO_X$-Konzentration zum Zeitpunkt $t_2$ verwendet. Jedoch können erfindungsgemäß auch andere Referenzwerte verwendet werden, insbesondere der Wert der $NO_X$-Konzentration zum Zeitpunkt $t_1$ bei der vom Motorsteuergerät 13 eine $NO_X$-Reduktion angefordert wird. Der Bezug der Werte der charakteristischen Merkmale auf einen Referenzwert erlaubt es, statt absoluter Werte der $NO_X$-Konzentration lediglich Werte relativ zu diesem Referenzwert zu verwenden und damit mögliche Offsetfehler der $NO_X$-Sonde 4 in einfacher Weise zu kompensieren.

Anstelle oder zusätzlich zu den genannten Merkmalen eines $NO_X$-Desorptionspeaks können erfindungsgemäß auch andere Merkmale, insbesondere die Anstiegsflanke, die Abfallflanke oder die Halbwertsbreite gewählt werden. Insbesondere könne auch nichtdreiecksförmige $NO_X$-Desorptionspeaks, ggf. auch mit mehr als einem Maximum berücksichtigt werden.

Zur Ermittlung der Werte der charakteristischen Merkmale aus dem zeitlichen Verlauf des $NO_X$-Signals werden von dem $NO_X$-Kontroligerät 13a an sich bekannte Sortier-Algorithmen, beispielsweise aus der Mustererkennung eingesetzt.

Zur weiteren Durchführung des erfindungsgemäßen Verfahrens werden die ermittelten Werte der charakteristischen Merkmale des $NO_X$-Desorptionspeaks mit den entsprechenden Prüfmustern verglichen. Da die Prüfmuster Soll-Werte, insbesondere Fehlerschwellwerte der jeweiligen charakteristischen Merkmale repräsentieren, werden sie vorzugsweise aus einem Modell für den $NO_X$-Speicherkatalysator 1 und gemessenen oder berechneten Betriebsparametem des Verbrennungsmotors 3 und der Abgasanlage 2 bestimmt. Als Betriebsparameter kommen hier insbesondere Last, Drehzahl, Rohemissionsverlauf, Abgastemperatur, Funktion eines Vorkatalysators 16 oder dgl. in Frage. Alternativ können die Prüfmuster auch in einer Lemphase des Motorsteuergeräts 13 bzw. der $NO_X$-Kontrolleinrichtung 13a aus den gemessenen Werten eines neuen $NO_X$-Speicherkatalysators 1 gewonnen werden.

Im einfachsten Fall besteht ein Prüfmuster nur aus dem Soll-Wert eines einzigen Merkmals, beispielsweise dem Maximalwert des $NO_X$-Desorptionspeaks.

Für eine differenzierte Diagnose werden die Werte einer Anzahl von zwei oder mehr charakterischen Merkmalen mit entsprechenden Prüfmustern verglichen. Das entsprechend der Abweichung zwischen den charakteristischen Merkmalen und den Prüfmustern gebildete Vergleichsergebnis spiegelt dann Art und Grad der Schädigung wieder. Hierbei wird die Erkenntnis verwendet, dass unterschiedliche Schädigungen des $NO_X$-Speicherkatalysators 1 den Wert der charakteristischen Merkmale des $NO_X$-Desorptionspeaks unterschiedlich beeinflussen. So resultiert eine thermische Schädigung bei einem gewissen Typ von $NO_X$-Speicherkatalysatoren in einem reduzierten Maximalwert des $NO_X$-Desorptionspeaks, beeinflusst aber nicht seine zeitliche Dauer, während eine Schwefelvergiftung lediglich zu einer verringerten zeitlichen Dauer führt. Bei $NO_X$-Speicherkatalysatoren anderen Typs können jedoch bedingt durch andere Schädigungsmechanismen andere Veränderungen des $NO_X$-Desorptionspeaks auftreten.

Aus Figur 2 ist zu entnehmen, dass einige Zeit nach Anforderung der $NO_X$-Regeneration zum Zeit-punkt $t_1$ der stromabwärts des $NO_X$-Speicherkatalysators 1 beispielsweise von dem Lambdasensor 15 ge-messene Lambdawert $L_n$ von einem Wert >2 auf einen Wert nahe 1 abfällt und zu einem späteren Zeitpunkt nach Beendigung des $NO_X$-Desorptionspeaks einen Wert <1 annimmt, bevor er nach Beendigung des Regenerationsmodus wieder ansteigt. Der Abfall des Lambdawerts $L_n$ auf einen Wert <1 erfolgt wie dem Diagramm der Figur 2 zu entnehmen ist für einen neuen $NO_X$-Speicherkatalysator 1 zu einem späteren Zeitpunkt als der entsprechende Abfall des Lambdawerts $L_a$ für einen gealterten Katalysator. Diese Unterschiede im zeitlichen Verlauf der Lambdawerte $L_n$ und $L_a$ können als zusätzliche Informationen zur Bewertung des $NO_X$-Desorptionspeaks herangezogen werden, ebenso wie ein ggf. vor dem $NO_X$-Desorptionspeak auftretender Peak in der Sauerstoffkonzentration.

In Abhängigkeit von dem Vergleichsergebnis wird von den Auswertungsmitteln 7 das Katalysator-Zustandssignal gebildet, das in Abhängigkeit von dem Vergleichsergebnis von den Speichermitteln 8 gespeichert und/oder von den Anzeigemitteln 9 angezeigt werden kann. Beispielsweise wird, wenn das Vergleichsergeb-nis einen vorgegebenen Fehlerschwellwert überschrei-tet, ein Fehlersignal gebildet. Bei einer differenzierteren Diagnose werden dabei auch nach Art und Grad der Schädigung unterschiedliche Katalysator-Zustandssignale verwendet. Falls eine Fehlfunktion des $NO_X$-Speicherkatalysators 1 erkannt wird, kann mit den Anzeigemitteln 9 der Fahrer eines Kraftfahrzeugs sofort gewarnt werden. Andererseits können die gespeicherte Informationen auch bei einem Werkstattaufenthalt des Kraftfahrzeugs an ein Werkstatt-Diagnosesystem weitergeleitet werden.

Für eine spätere Auswertung können auch die Werte der charakteristischen Merkmale eines oder mehrerer $NO_X$-Desorptionspeaks gespeichert werden. Alternativ oder zusätzlich hierzu kann auch der zeitliche Verlauf der Werte der $NO_X$-Konzentration zumindest in einem oder mehreren den $NO_X$-Desorptionspeaks zu-geordneten Zeitfenstern gespeichert werden um eine vollständigere Information zur Verfügung zu haben

Da die gemessenen Werte der $NO_X$-Konzentration Schwankungen unterliegen können, ist bei einer weiteren Ausführungsform der Erfindung eine Mittelwertbildung zum Ausgleich dieser Schwankungen vorgesehen. Hierzu werden die Werte der charakteristischen Merkmale über ein Anzahl von Speicherzyklen des $NO_X$-Speicherkatalysators ermittelt und ein ent-sprechender Mittelwert, beispielsweise ein arithmeti-scher Mittelwert gebildet. Diese Maßnahme kann generell vorgesehen sein oder in Abhängigkeit von den ermittelten Werten der charakteristischen Merkmale, insbesondere vom Wert der Schwankungsbreite vorgesehen werden.

In einer bevorzugten Ausführungsform der Erfindung wird aus den ermittelten Werten der charakteristischen Merkmale des $NO_X$-Desorptionspeaks eine Katalysator-Zustandskennzahl K bestimmt, indem die Werte der charakteristischen Merkmale bewertet und algebraisch kombiniert werden. Eine Möglichkeit hierfür zeigt die Gleichung:

$$K = H_k{}^*c_1 + D_k{}^*c_2 + A_k{}^*c_3.$$

Hier bezeichnet $H_k$ den Maximalwert, $D_k$ die zeitliche Dauer und $A_k$ die Fläche des jeweiligen $NO_X$-Desorptionspeaks. Die Bewertungsfaktoren $c_1$ bis $c_3$ er-lauben eine Anpassung an die spezifischen Eigenschaften eines konkreten $NO_X$-Speicherkatalysators 1. Ebenso erlauben die Bewertungsfaktoren eine Anpassung an Eigenschaften des Verbrennungsmotors 3 und der Abgasanlage 2. Das Katalysator-Zustandssignal wird bei dieser Ausführungsform der Erfindung in Abhängigkeit von dem Wert der Katalysator-Zustandskennzahl K und einem Fehlerschwellwert gebildet.

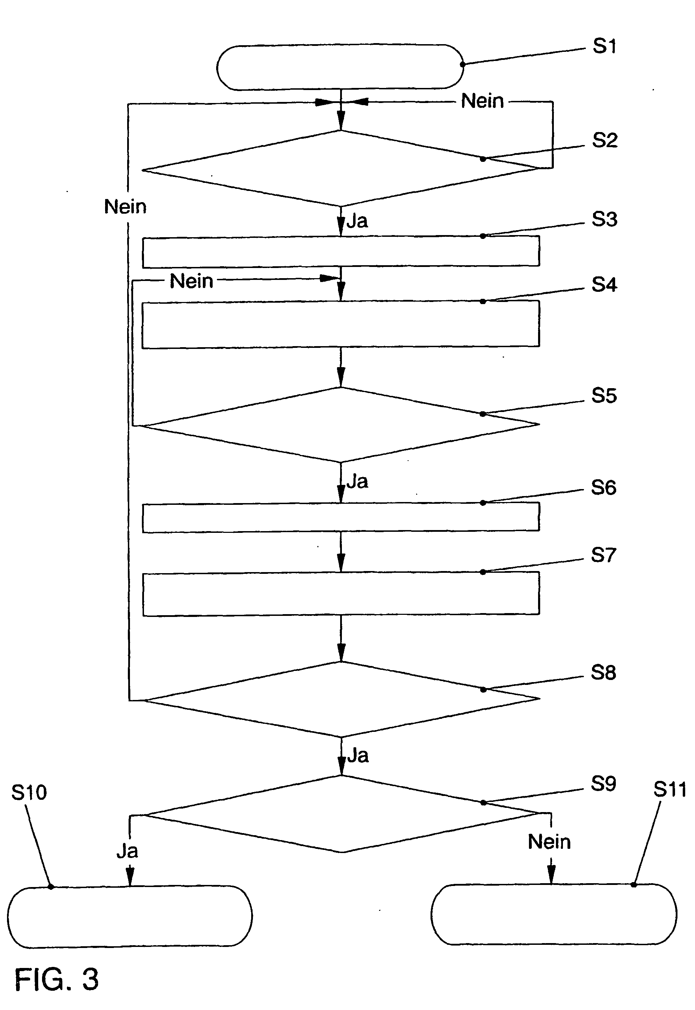

Das Ablaufdiagramm in Figur 3 zeigt einen typischen Ablauf bei der Ermittlung und Bewertung der Merkmale eines $NO_X$-Desorptionspeaks. Bei dieser Ausführungsform der Erfindung wird eine oder mehrere Katalysator-Zustandskennzahlen K berechnet. Nach dem Start der Diagnose in Schritt S1 wird gewartet bis ein Signal den Beginn des $NO_X$-Regenerationsmodus zum Zeitpunkt $t_2$ anzeigt, weil das $NO_X$-Signal den Schwellwert $NO_X$-S erreicht hat. Sobald hierfür am Verzweigungspunkt S2 eine positive Entscheidung erfolgt, wird in Schritt S3 der Wert des $NO_X$-Signals zum Zeit-punkt $t_2$ gespeichert. Anschließend wird in Schritt S4 der zeitliche Verlauf des $NO_X$-Signals gespeichert. Dabei muß nicht in jedem Fall der gesamte zeitliche Verlauf des $NO_X$-Signals gespeichert werden, da in Abhängigkeit von den gewählten charakteristischen Merkmalen des $NO_X$-Desorptionspeaks auch ein Teilbereich des zeitlichen Verlaufs des $NO_X$-Signals ausreichen kann. Sobald das $NO_X$-Signal den gespeicherten Wert des $NO_X$-Signal zum Zeitpunkt $t_2$ unterschreitet, erfolgt am Verzweigungspunkt S5 eine Entscheidung zur Ermittlung der $NO_X$-Desorptionspeakmerkmale in Schritt S6, da zu diesem Zeitpunkt der $NO_X$-Desorptionspeak als beendet angesehen wird. Die ermittelten Werte werden in Schritt S7 mit Bewertungsfaktoren versehen und anschließend die zugehörige Katalysator-Zustandskennzahl K berechnet und gespeichert. In Schritt S8 wird abgefragt, ob die Anzahl der Katalysator-Zustandskennzahlen K einen gegebenen Schwellwert überschreitet. Falls dies verneint wird, erfolgt ein Rücksprung zur Verzweigungspunkt S2. Ist die Anzahl der ermittelten Katalysator-Zustandskennzahlen K größer als ein vorgegebener Schwellwert, erfolgt in Schritt S9 eine Mittelwertbildung der Katalysator-Zustandskennzahl K und anschließend im Verzweigungspunkt S9 eine Abfrage, ob der Mittelwert der Katalysator-Zustandskennzahl K größer als ein vorgegebener Schwellwert ist.

Ist der Mittelwert der Katalysator-Zustandskennzahl K größer als der Schwellwert, erfolgt in Schritt S10 die Feststellung eines Fehlers und ggf. die Bildung eines Fehlersignals. Ist der Mittelwert der Katalysatorzustandskennzahl K kleiner als der Schwellwert, erfolgt in Schritt S11 die Feststellung, dass keine Fehlfunktion des $NO_X$-Speicherkatalysator 1 vorliegt.

Insgesamt ermöglicht die erfindungsgemäße Ermittlung und nachfolgende Auswertung von Werten charakteristischer Merkmale des bei einem Umschalten von einem Absorptions- auf einen Regenerationsmodus auftretenden $NO_X$-Desorptionspeaks eine schnelle und unaufwendige On-Board-Diagnose des $NO_X$-Speicherkatalysators eines Kraftfahrzeugs.

**Patentansprüche**

1. Verfahren zur Diagnose eines $NO_X$-Speicherkatalysators, der in der Abgasanlage eines Verbrennungsmotors angeordnet und in Abhängigkeit vom Lambdawert in einem Adsorptions- und einem Regenerationsmodus betreibbar ist, wobei die $NO_X$-Konzentration im Abgas stromabwärts des $NO_X$-Speicherkatalysators gemessen wird, wobei bei einem Übergang des $NO_X$-Speicherkatalysators vom Adsorptionsmodus zum Regenerationsmodus die Werte von charakteristischen Merkmalen eines $NO_X$-Desorptionspeaks im zeitlichen Verlauf der $NO_X$-Konzentration ermittelt, mit vorgegebenen Prüfmustern verglichen, ein Vergleichsergebnis gebildet und ein in Abhängigkeit von dem Vergleichsergebnis gebildetes Katalysator-Zustandssignal, insbesondere ein Fehlersignal gespeichert und/oder angezeigt wird, **dadurch gekennzeichnet, dass** verschiedenen Arten von Schädigungen des $NO_X$-Katalysators verschiedene Katalysator-Zustandssignale zugeordnet werden.

2. Verfahren nach Anspruch 1, **dadurch gekennzeichnet, dass** als charakteristische Merkmale des $NO_X$-Desorptionspeaks die Merkmale Form, Anzahl der Maxima, Höhe der Maxima, zeitliche Dauer, Fläche, Halbwertsbreite, Anstiegs- und/oder Abstiegsflanke jeweils bezogen auf eine vorgegebene Referenz-$NO_X$-Konzentration gewählt werden.

3. Verfahren nach Anspruch 2, **dadurch gekennzeichnet, dass** bei einem $NO_X$-Desorptionspeak aus der Höhe des Maximums, der zeitlichen Dauer und der Fläche des $NO_X$-Desorptionspeaks eine Katalysator-Zustandskennzahl gebildet und das Katalysator-Zustandssignal in Abhängigkeit von der Katalysator-Zustandskennzahl gebildet wird.

4. Verfahren nach Anspruch 2 oder 3, **dadurch gekennzeichnet, dass** als Referenz-$NO_X$-Konzentration ein $NO_X$-Schwellwert gewählt wird, bei der der Regenerationsmodus des $NO_X$-Speicherkatalysators eingeleitet wird.

5. Verfahren nach Anspruch 2 oder 3, **dadurch gekennzeichnet, dass** bei einem in Schichtlademodus betreibbaren Verbrennungsmotor als Referenz-$NO_X$-Konzentration der Wert der $NO_X$-Konzentration zum Zeitpunkt eines Umschaltens des Verbrennungsmotors auf Homogenbetrieb gewählt wird.

6. Verfahren nach zumindest einem der Ansprüche 1 bis 5, **dadurch gekennzeichnet, dass** ausschließlich relative Änderungen der $NO_X$-Konzentration bezogen auf einen vorgegebenen Bezugswert berücksichtigt werden.

7. Verfahren nach zumindest einem der Ansprüche 1 bis 6, **dadurch gekennzeichnet, dass** in Abhängigkeit von dem Vergleichsergebnis der zeitliche Verlauf der Werte der $NO_X$-Konzentration, in einem oder mehreren Zeitfenstern gespeichert wird.

8. Verfahren nach zumindest einem der Ansprüche 1 bis 7, **dadurch gekennzeichnet, dass** in Abhängigkeit von dem Vergleichsergebnis die Werte der charakteristischen Merkmale des $NO_X$-Desorptionspeaks gespeichert werden.

9. Verfahren nach zumindest einem der Ansprüche 1 bis 8, **dadurch gekennzeichnet, dass** die Prüfmuster in Abhängigkeit von Betriebsparametern des Verbrennungsmotors, wie Last, Drehzahl, Rohemissionsverlauf oder dergleichen gewählt werden.

10. Verfahren nach zumindest einem der Ansprüche 1 bis 9, **dadurch gekennzeichnet, dass** die Prüfmuster in Abhängigkeit von Betriebsparametern der Abgasanlage, wie Abgastemperatur, Funktion eines Vorkatalysators oder dergleichen gewählt werden.

11. Verfahren nach zumindest einem der Ansprüche 1 bis 10, **dadurch gekennzeichnet, dass** in Abhängigkeit von den Werten der charakteristischen Merkmale, insbesondere von ihrer Schwankungsbreite für eine Anzahl von Speicherzyklen des $NO_x$-Speicherkatalysators die Werte der charakteristischen Merkmale gespeichert, ihr Mittelwert bestimmt und das Katalysator-Zusstandssignal in Abhängigkeit von dem Mittelwert gebildet wird.

12. Verfahren nach zumindest einem der Ansprüche 3 bis 11, **dadurch gekennzeichnet, dass** in Abhängigkeit von den Werten der charakteristischen Merkmale, insbesondere von ihrer Schwankungsbreite für eine Anzahl von Speicherzyklen des $NO_x$-Speicherkatalysators die Werte der Katalysator-Zustandskennzahl gespeichert, ihr Mittelwert bestimmt und das Katalysator-Zustandssignal in Abhängigkeit von dem Mittelwert gebildet wird.

13. Vorrichtung zur Diagnose eines $NO_x$-Speicherkatalysators, der in der Abgasanlage eines Verbrennungsmotors angeordnet und in Abhängigkeit vom Lambdawert in einem Adsorptions- und einem Regenerationsmodus betreibbar ist, mit einer eine Lambda-Sonde aufweisenden Lambda-Regelung zur Messung und Veränderung des Lambdawertes und einem stromabwärts des $NO_x$-Speicherkatalysators angeordneten $NO_x$-Sensor zur Messung der $NO_x$-Konzentration im Abgas, **dadurch gekennzeichnet, dass** eine $NO_x$-Kontrolleinrichtung vorgesehen ist, der die Messwerte des $NO_x$-Sensors zuführbar sind und

- Mittel zur Ermittlung der Werte von charakteristischen Merkmalen eines $NO_x$-Desorptionspeak im zeitlichen Verlauf der $NO_x$-Konzentration bei einem Übergang des $NO_x$-Speicherkatalysators vom Adsorptionsmodus zum Regenerationsmodus,

- Mittel zum Vergleich der Werte der charakteristischen Merkmale mit vorgegebenen Prüfmustern und zur Bildung eines Vergleichsergebnis,

- Auswertungsmittel zur Bildung eines Katalysator-Zustandssignals, insbesondere eines Fehlersignals in Abhängigkeit von dem Vergleichsergebnis aufweist, wobei verschiedenen Arten von Schädigungen des $NO_x$-Katalysators verschiedene Katalysator-Zustandssignale zugeordnet werden.

14. Vorrichtung nach Anspruch 13, **dadurch gekennzeichnet, dass** Mittel zur Veränderung der Prüfmuster in Abhängigkeit von Betriebsparametem des. Verbrennungsmotors und/oder der Abgasanlage vorgesehen sind.

**Claims**

1. Method for diagnosis of an $NO_x$ storage catalytic converter which is arranged in the exhaust system of an internal combustion engine and can be operated in an adsorption mode and a regeneration mode depending on the lambda value, the $NO_x$ concentration in the exhaust gas being measured downstream of the $NO_x$ storage catalytic converter, the values of characteristic features of an $NO_x$ desorption peak in the time profile of the $NO_x$ concentration being determined at a transition of the $NO_x$ storage catalytic converter from the adsorption mode to the regeneration mode, these values being compared with predetermined test samples, a comparison result being formed and a catalytic converter state signal, which is formed as a function of the comparison result, in particular a fault signal, being stored and/or displayed, **characterized in that** different catalytic converter state signals are assigned to different types of damage to the $NO_x$ catalytic converter.

2. Method according to Claim 1, **characterized in that** the characteristic features of the $NO_x$ desorption peak selected are the features shape, number of maxima, height of the maxima, time duration, surface area, full width at half maximum, rising and/or falling flank, in each case based on a predetermined reference $NO_x$ concentration.

3. Method according to Claim 2, **characterized in that** at an $NO_x$ desorption peak, a catalytic converter state characteristic variable is formed from the height of the maximum, the time duration and the surface area of the $NO_x$ desorption peak, and the catalytic converter state signal is formed as a function of the catalytic converter state characteristic variable.

4. Method according to Claim 2 or 3, **characterized in that** the reference $NO_x$ concentration selected is an $NO_x$ threshold value at which the regeneration mode of the $NO_x$ storage catalytic converter is initiated.

5. Method according to Claim 2 or 3, **characterized in that** in the case of an internal combustion engine which can be operated in stratified-charge mode, the value of the $NO_x$ concentration at the instant at which the internal combustion engine is switched to homogenous operation is selected as the reference $NO_x$ concentration.

6. Method according to at least one of Claims 1 to 5, **characterized in that** only relative changes in the NOx concentration with respect to a predetermined reference-base value are taken into account.

**7.** Method according to at least one of Claims 1 to 6, **characterized in that** the time profile of the values of the $NO_x$ concentration in one or more time windows is stored as a function of the comparison result.

**8.** Method according to at least one of Claims 1 to 7, **characterized in that** the values of the characteristic features of the $NO_x$ desorption peak are stored as a function of the comparison result.

**9.** Method according to at least one of Claims 1 to 8, **characterized in that** the test samples are selected as a function of operating parameters of the internal combustion engine, such as load, engine speed, untreated emission profile or the like.

**10.** Method according to at least one of Claims 1 to 9, **characterized in that** the test samples are selected as a function of operating parameters of the exhaust system, such as exhaust-gas temperature, function of a primary catalytic converter or the like.

**11.** Method according to at least one of Claims 1 to 10, **characterized in that** the values of the characteristic features are stored for a number of storage cycles of the $NO_x$ storage catalytic converter as a function of the values of the characteristic features, in particular of their fluctuation range, their mean value is determined and the catalytic converter state signal is formed as a function of the mean value.

**12.** Method according to at least one of Claims 3 to 11, **characterized in that** the values of the catalytic converter state characteristic variable are stored for a number of storage cycles of the $NO_x$ storage catalytic converter as a function of the values of the characteristic features, in particular of their fluctuation range, their mean value is determined and the catalytic converter state signal is formed as a function of the mean value.

**13.** Apparatus for the diagnosis of an $NO_x$ storage catalytic converter which is arranged in the exhaust system of an internal combustion engine and can be operated in an adsorption mode and a regeneration mode as a function of the lambda value, having a lambda control including a lambda sensor for measuring and altering the lambda value and an $NO_x$ sensor arranged downstream of the $NO_x$ storage catalytic converter for measuring the $NO_x$ concentration in the exhaust gas, **characterized in that** an $NO_x$ control device is provided, which can be supplied with the measured values from the $NO_x$ sensor and has

- means for determining the values of characteristic features of an $NO_x$ desorption peak in the time profile of the $NO_x$ concentration at a transition of the $NO_x$ storage catalytic converter from the adsorption mode to the regeneration mode,

- means for comparing the values of the characteristic features with predetermined test samples and for forming a comparison result,

- evaluation means for forming a catalytic converter state signal, in particular a fault signal, as a function of the comparison result, with different catalytic converter state signals being assigned to different types of damage to the $NO_x$ catalytic converter.

**14.** Apparatus according to Claim 13, **characterized in that** there are means for altering the test samples as a function of operating parameters of the internal combustion engine and/or of the exhaust system.

**Revendications**

**1.** Procédé pour effectuer le diagnostic d'un catalyseur accumulateur de $NO_x$ qui est aménagé dans l'installation de gaz d'échappement d'un moteur à combustion et peut opérer en fonction de la valeur lambda en mode d'adsorption et en mode de régénération, dans lequel la concentration en $NO_x$ dans le gaz d'échappement est mesurée en aval du catalyseur accumulateur de $NO_x$, dans lequel, lors d'un passage du catalyseur accumulateur de $NO_x$ du mode d'adsorption au mode de régénération, on détermine la valeur des caractéristiques d'un pic de désorption de $NO_x$ dans la courbe de la concentration en $NO_x$ en fonction du temps, on les compare à des modèles témoins prédéterminés, on forme un résultat de la comparaison et un signal d'état du catalyseur formé en fonction du résultat de la comparaison, en particulier un signal d'erreur est enregistré et/ou affiché, **caractérisé en ce que** différents signaux d'état du catalyseur sont attribués à différents types de dégradations du catalyseur de $NO_x$.

**2.** Procédé selon la revendication 1, **caractérisé en ce que** l'on choisit comme caractéristiques du pic de désorption de $NO_x$ les caractéristiques de forme, de nombre des maxima, de hauteur des maxima, de durée dans le temps, de surface, de largeur de valeur de demi-vie, de flanc de montée et/ou de flanc de descente respectivement par rapport à une concentration de référence en $NO_x$ prédéterminée.

**3.** Procédé selon la revendication 2, **caractérisé en ce que**, dans un pic de désorption de $NO_x$, un indice d'état du catalyseur est constitué de la hauteur du maximum, de la durée dans le temps et de la surface du pic de désorption de $NO_x$ et **en ce que** le signal d'état du catalyseur est formé en fonction de l'indice d'état du catalyseur.

4. Procédé selon la revendication 2 ou 3, **caractérisé en ce que** l'on choisit comme concentration de référence en $NO_x$ une valeur de seuil de $NO_x$ à laquelle est déclenché le mode de régénération du catalyseur accumulateur de $NO_x$.

5. Procédé selon la revendication 2 ou 3, **caractérisé en ce que** l'on choisit dans un moteur à combustion pouvant opérer en mode de charge stratifiée comme concentration de référence en $NO_x$ la valeur de la concentration en $NO_x$ lors d'un passage du moteur à combustion en fonctionnement homogène.

6. Procédé selon au moins l'une quelconque des revendications 1 à 5, **caractérisé en ce que** l'on tient compte exclusivement de modifications relatives de la concentration en $NO_x$ par rapport à une valeur de référence prédéterminée.

7. Procédé selon au moins l'une quelconque des revendications 1 à 6, **caractérisé en ce que**, en fonction du résultat de la comparaison, la courbe des valeurs de la concentration en $NO_x$ en fonction du temps est enregistrée dans une ou plusieurs fenêtres temporelles.

8. Procédé selon au moins l'une quelconque des revendications 1 à 7, **caractérisé en ce que** les valeurs des caractéristiques du pic de désorption de $NO_x$ sont enregistrées en fonction du résultat de la comparaison.

9. Procédé selon au moins l'une quelconque des revendications 1 à 8, **caractérisé en ce que** les modèles témoins sont choisis en fonction de paramètres de fonctionnement du moteur à combustion, tels que la charge, le régime, la courbe d'émission brute ou similaires.

10. Procédé selon au moins l'une quelconque des revendications 1 à 9, **caractérisé en ce que** les modèles témoins sont choisis en fonction des paramètres de fonctionnement de l'installation de gaz d'échappement, tels que la température des gaz d'échappement, le fonctionnement d'un pré-catalyseur ou similaires.

11. Procédé selon au moins l'une quelconque des revendications 1 à 10, **caractérisé en ce que**, en fonction des valeurs des caractéristiques, en particulier de leur largeur de fluctuation sur un certain nombre de cycles d'accumulation du catalyseur accumulateur de $NO_x$, on enregistre les valeurs des caractéristiques, on détermine leur valeur moyenne et le signal d'état du catalyseur est formé en fonction de la valeur moyenne.

12. Procédé selon au moins l'une quelconque des revendications 3 à 11, **caractérisé en ce que**, en fonction des valeurs des caractéristiques, en particulier de leur largeur de fluctuation sur un certain nombre de cycles d'accumulation du catalyseur accumulateur de $NO_x$, on enregistre les valeurs de l'indice d'état du catalyseur, on détermine leur valeur moyenne et le signal d'état du catalyseur est formé en fonction de la valeur moyenne.

13. Dispositif pour effectuer le diagnostic d'un catalyseur accumulateur de $NO_x$ qui est aménagé dans l'installation de gaz d'échappement d'un moteur à combustion et peut opérer en fonction de la valeur lambda en mode d'adsorption et en mode de régénération, avec une régulation lambda présentant une sonde lambda pour mesurer et modifier la valeur lambda et un capteur de $NO_x$ aménagé en aval du catalyseur accumulateur de $NO_x$ pour mesurer la concentration en $NO_x$ dans le gaz d'échappement, **caractérisé en ce qu'**il est prévu un dispositif de contrôle de $NO_x$ auquel peuvent être acheminées les valeurs de mesure du capteur de $NO_x$ et qui présente :

   - des moyens pour déterminer les valeurs de caractéristiques d'un pic de désorption de $NO_x$ dans la courbe de la concentration en $NO_x$ en fonction du temps lors d'un passage du catalyseur accumulateur de $NO_x$ du mode d'adsorption au mode de régénération,

   - des moyens pour comparer les valeurs des caractéristiques avec des modèles témoins prédéterminés et pour former un résultat de comparaison,

   - des moyens d'évaluation pour former un signal d'état du catalyseur, en particulier un signal d'erreur en fonction du résultat de la comparaison, divers signaux d'état du catalyseur étant attribués à divers types de dégradations du catalyseur de $NO_x$.

14. Dispositif selon la revendication 13, **caractérisé en ce qu'**il est prévu des moyens pour modifier les modèles témoins en fonction de paramètres de fonctionnement du moteur à combustion et/ou de l'installation de gaz d'échappement.

FIG. 1

FIG. 2

FIG. 3